# EUROPÄISCHE PATENTSCHRIFT

(11) **EP 3 717 537 B1**
(45) Veröffentlichungstag und Bekanntmachung des Hinweises auf die Patenterteilung: **19.04.2023**
(21) Anmeldenummer: 18804665.0
(22) Anmeldetag: 27.11.2018
(51) Int. Cl.: C08G 18/48, C08G 18/50, C08G 18/76, C08G 18/12, C08G 18/18, C08G 18/30, C08L 75/08, C08G 101/00

(54) **REAKTIONSSYSTEM FÜR EINEN 1K-POLYURETHAN-SCHAUMSTOFF**
REACTION SYSTEM FOR A 1K-POLYURETHANE FOAM
SYSTEME DE RÉACTION POUR UNE MOUSSE DURE DE POLYURÉTHANE 1K

(30) Priorität: 30.11.2017 EP 17204617
(43) Veröffentlichungstag der Anmeldung: 07.10.2020
(73) Patentinhaber: Covestro Deutschland AG, 51373 Leverkusen (DE)
(72) Erfinder: ARNTZ, Hans-Detlef, 51491 Overath (DE); FELSKE, Ernst, 41464 Neuss (DE); KLASEN, Patrick, 52391 Vettweiß (DE); MICHELS, Erhard, 51061 Köln (DE); FROMMONT, Marion, 51377 Leverkusen (DE)
(74) Vertreter: Levpat
(86) Internationale Anmeldenummer: PCT/EP2018/082717
(87) Internationale Veröffentlichungsnummer: WO 2019/105937

(56) Entgegenhaltungen:
- EP-A1- 0 900 811
- EP-A1- 3 077 435

## Beschreibung

Die vorliegende Erfindung betrifft ein Einkomponenten-Reaktionssystem (auch 1K-Reaktionssystem genannt) zur Herstellung von viskoelastischen Polyurethan-Schaumstoffen (auch PUR-Schaumstoffe genannt) mit besonders guten Brandeigenschaften, sowie Verfahren zu dessen Herstellung und deren Verwendung. Die Erfindung betrifft auch die aus dem erfindungsgemäßen Einkomponenten-Reaktionssystem hergestellten viskoelastischen PUR-Schaumstoffe.

Das erfindungsgemäße Einkomponenten-Reaktionssystem umfasst die folgenden Bestandteile:
A) eine organische Polyisocyanatkomponente, die teilweise als Präpolymer vorliegt (im folgenden genannt "Semipräpolymer"),
   wobei die organische Polyisocyanatkomponente A) weiterhin dadurch gekennzeichnet ist, dass der Gehalt an freien, nicht mit Polyol reagierten Isocyanaten 0 Gew.-% bis < 25 Gew.-% beträgt, bezogen auf die Polyisocyanatkomponente A), und dass
   der NCO-Gehalt > 7 Gew.-% bis 13 Gew.-% gemäß EN ISO 11909 (2007), bezogen auf das Gesamtgewicht der Komponente A), beträgt,
B) ggfls. eine isocyanatreaktive Komponente, deren isocyanatreaktiven funktionellen Gruppen ausschließlich solche mit wenigstens einem Zerewitinoff-aktiven Wasserstoffatom sind,
C) mindestens einen Schaumstabilisator,
D) mindestens einen Katalysator, der geeignet ist, die Reaktion des Semipräpolymers mit der Luftfeuchtigkeit zu katalysieren,
E) mindestens ein physikalisches Treibmittel mit einem Siedepunkt von weniger als 0 °C und gegebenenfalls Co-Treibmittel,
F) mindestens eine gegenüber Isocyanaten nicht reaktive Verbindung,
G) gegebenenfalls weitere Hilfs- und Zusatzstoffe,
dadurch gekennzeichnet, dass
das Semipräpolymer durch Umsetzung von
A.1) einer organischen Polyisocyanatkomponente A.1), welche zu mindestens 75 Gew.-% aus den monomeren Diphenylmethandiisocyanaten 2,4'-MDI, 2,2'-MDI und/oder 4,4'-MDI (im Folgenden einzeln oder gemeinsam "monomeres MDI" oder "mMDI" genannt) besteht, und
A.2) einer Polyolkomponente A.2) mit einer Funktionalität Fₙ (bezogen auf die Zerewitinoff-aktiven Wasserstoffatome in der Polyolkomponente) von > 1,5 bis < 2,5 und einer OH-Zahl von 28 bis 200 mg KOH/g gebildet wird,
   und
   wobei die Komponente F) ausgewählt ist aus der Gruppe bestehend aus Lactonen, Lactiden, cyclischen Carbonaten, cyclischen Anhydriden und Mischungen dieser Verbindungen.

Die Erfindung betrifft ferner ein Verfahren zur Herstellung des erfindungsgemäßen Einkomponenten-Reaktionssystems, ein Verfahren zur Herstellung von viskoelastischen Polyurethan-Schaumstoffen aus dem erfindungsgemäßen Einkomponenten-Reaktionssystem, einen PUR-Schaumstoff, erhältlich aus diesem Einkomponenten-Reaktionssystem, die Verwendung des erfindungsgemäßen Einkomponenten-Reaktionssystems als 1K-Montageschaumstoff, sowie einen Druckbehälter enthaltend das Einkomponenten-Reaktionssystem und ein Treibmittel.

Die Herstellung von Polyurethan-Schaumstoffen aus Einwegdruckbehältern ist bekannt. Dabei wird ein isocyanatgruppenhaltiges Präpolymer durch Reaktion einer Polyolkomponente unter Zusatz von Schaumstabilisatoren und Katalysatoren sowie gegebenenfalls von Weichmachern, Flammschutzmitteln, Vernetzern und weiteren Zusatzstoffen mit organischen Di- und/oder Polyisocyanaten hergestellt. Diese Umsetzung erfolgt normalerweise in Gegenwart von verflüssigtem Treibmittel in einem Druckbehälter. Nach Abschluss der Präpolymerbildung kann der PUR-Schaumstoff dann über ein Ventil dosiert ausgetragen werden. Dabei besitzt der PUR-Schaumstoff zuerst eine sahnige Konsistenz und härtet dann anschließend durch Einwirken der Umgebungsfeuchtigkeit, z.B. aus der Luft unter Volumenvergrößerung, aus. Bei solchen Schaumstoffen spricht man daher von Einkomponenten-Schaumstoffen (1K-Schaumstoffe).

Um die gewünschten Endeigenschaften des Schaumstoffes wie z.B. Härte oder Zellbeschaffenheit zu erhalten, wird mit einem deutlichen Überschuss des Isocyanats gegenüber der Polyolkomponente gearbeitet. Auf diese Weise wird die sogenannte Vorverlängerung und damit die Molekulargewichtsverteilung des Präpolymers reguliert. Je geringer die Vorverlängerung des Präpolymers, desto enger ist die Molekulargewichtsverteilung und desto präziser einstellbar sind die Endeigenschaften des ausgehärteten PUR-Schaumstoffes.
genannten Flammschutzmittel sind jedoch im Schaumstoff nicht chemisch gebunden und können mit der Zeit ausdiffundieren, wodurch sich die Brandeigenschaften ändern. Zum anderen stehen diese Flammschutzmittel aufgrund ihrer zunehmenden Verbreitung in der Umwelt und teilweise gesundheitsschädlicher Wirkung in der Kritik. Spröde aushärtende Schaumstoffe bergen die Gefahr eines Schaumstoffabrisses, und damit der Ausbildung von Wärmebrücken.

In WO 2015/082460 wird ein 1K-Reaktionssystem zur Herstellung von Polyurethan-Hartschaumstoffen beschrieben, welches auf einem monomerarmen Polyisocyanat - Präpolymer mit einem Isocyanatgehalt von weniger als 8 Gew.-% basiert und dessen Gehalt an monomerem Isocyanat durch Destillation auf höchstens 1 Gew.-% reduziert wird. Unter bestimmten Bedingungen, nämlich bei Kombination von Ethylenoxid-haltigen Polyolen, Polyesterpolyolen oder bromierten einbaubaren Flammschutzmitteln mit einem bestimmten Stabilisator, können mit diesen Systemen auch ohne Zugabe nicht einbaubarer Flammschutzmittel 1K-Schaumstoffe mit B2-Brandverhalten erhalten werden. Nachteilig an der Verwendung von monomerarmen MDI ist allerdings, dass für seine Herstellung ein zusätzlicher Destillationsschritt notwendig ist und die hohe Viskosität des Isocyanats die Auswahl der Polyolkomponente beschränkt.

In EP 0 900 811 Al wird offenbart, dass die Verwendung von cyclischen organischen Carbonaten bei der Polyurethanschaumherstellung, insbesondere in Polyurethan-Polyether-Weichschaumformulierungen, eine deutliche Verbesserung der Zellstruktur (Zellfeinheit und Gleichmäßigkeit der ausgebildeten Zellen) der entstehenden Schäume bewirkt.

Ausgehend vom Stand der Technik bestand deshalb die Aufgabe der vorliegenden Erfindung darin, eine 1K-Polyurethan-Formulierung auf Basis eines entsprechenden Semipräpolymers zur Verfügung zu stellen, die gut austragbare und gleichzeitig nach dem Aushärten feste Polyurethan-Schaumstoffe liefert, welche auch ohne Zusatz von Flammschutzmitteln und bei niedrigem Gesamthalogengehalt (< 200 ppm) gute Brandeigenschaften und gleichzeitig gute Verarbeitungseigenschaften aufweist und die Ausbildung einer viskoelastischen Schaumstoffcharakteristik ermöglicht. Bevorzugt soll die 1K-Formulierung, zu Montageschaumstoff verarbeitet, im Brandtest die E-Klassifizierung nach DIN EN 13501-1 (2010) erhalten.

Die Aufgabe wird gelöst durch ein Einkomponenten-Reaktionssystem zur Herstellung von viskoelastischen Polyurethan-Schaumstoffen, umfassend die folgenden Bestandteile:
A) eine organische Polyisocyanatkomponente, die teilweise als Präpolymer vorliegt (im folgenden genannt "Semipräpolymer"),
   wobei die organische Polyisocyanatkomponente A) weiterhin dadurch gekennzeichnet ist, dass der Gehalt an freien, nicht mit Polyol reagierten Isocyanaten 0 Gew.-% bis < 25 Gew.-% beträgt, bezogen auf die Polyisocyanatkomponente A), und dass
   der NCO-Gehalt > 7 Gew.-% bis 13 Gew.-%, bezogen auf das Gesamtgewicht der Komponente A), beträgt,
B) ggfls. eine isocyanatreaktive Komponente, deren isocyanatreaktiven funktionellen Gruppen ausschließlich solche mit wenigstens einem Zerewitinoff-aktiven Wasserstoffatom sind,
C) mindestens einen Schaumstabilisator,
D) mindestens einen Katalysator, der geeignet ist, die Reaktion des Semipräpolymers mit der Luftfeuchtigkeit zu katalysieren,
E) mindestens ein physikalisches Treibmittel mit einem Siedepunkt von weniger als 0 °C und gegebenenfalls Co-Treibmittel,
F) mindestens eine gegenüber Isocyanaten nicht reaktive Verbindung,
G) gegebenenfalls weitere Hilfs- und Zusatzstoffe,
dadurch gekennzeichnet, dass
das Semipräpolymer durch Umsetzung von
A.1) einer organischen Polyisocyanatkomponente A.1), welche zu mindestens 75 Gew.-% aus den monomeren Diphenylmethandiisocyanaten 2,4'-MDI, 2,2'-MDI und/oder 4,4`-MDI besteht, und
A.2) einer Polyolkomponente A.2) mit einer Funktionalität Fₙ (bezogen auf die Zerewitinoff-aktiven Wasserstoffatome in der Polyolkomponente) von > 1,5 bis < 2,5 und einer OH-Zahl von 28 bis 200 mg KOH/g gebildet wird,
   und
   wobei die Komponente F) ausgewählt ist aus der Gruppe bestehend aus Lactonen, Lactiden, cyclischen Carbonaten, cyclischen Anhydriden und Mischungen dieser Verbindungen.

Mit "Semipräpolymer" im Sinne dieser Anmeldung wird ein Präpolymer bezeichnet, welches durch teilweise Umsetzung einer Isocyanatkomponente mit einer Polyolkomponente erhalten wird und welches noch freie, nicht umgesetzte Anteile der Isocyanatkomponente enthält.

Mit "Funktionalität Fₙ" eines Polyols / einer Polyolmischung ist im Sinne dieser Anmeldung die zahlengemittelte Funktionalität der Polyolmischung aus Polyol 1 ... Polyol i gemeint, berechnet mittels Fₙ = Σ x; Fᵢ mit xᵢ = Molenbruch und F; Starterfunktionalität des Polyols i.

Das Äquivalentgewicht gibt das Verhältnis der zahlenmittleren Molekulargewicht und der Funktionalität der Isocyanat-reaktiven Komponente an. Die Angaben des Äquivalentgewichts für Mischungen berechnen sich aus Äquivalentgewichten der einzelnen Komponenten in ihren jeweiligen molaren Anteilen und beziehen sich auf das zahlenmittlere Äquivalentgewicht der Mischung.

Mit "Molekulargewicht" oder "Molmasse" ist im Sinne dieser Anmeldung das zahlengewichtete mittlere Molekulargewicht gemeint.

Die Kennzahl (Index) gibt das prozentuale Verhältnis der tatsächlich eingesetzten IsocyanatMenge zur stöchiometrischen, d.h. für die Umsetzung der OH-Äquivalente berechneten Menge an Isocyanat-Gruppen (NCO)-Menge an.

Angaben der OH-Zahl für Mischungen beziehen sich auf die zahlenmittlere OH-Zahl, berechnet aus den OH-Zahlen der einzelnen Komponenten (bestimmt gemäß DIN 53240-1 (2013)).

Die zur Herstellung des Semipräpolymers verwendete organische Polyisocyanatkomponente A.1) enthält mindestens 75 Gew.-%, bevorzugt mindestens 85 Gew.-% und besonders bevorzugt mindestens 95 Gew.-% , bezogen auf das Gesamtgewicht von A.1), monomeres MDI. Daneben kann A.1) in geringen Anteilen weitere organische Isocyanate enthalten, z.B. die höherkernigen MDI - Typen ("oligomeres MDI"), 2,4- und 2,6-Toluylendiisocyanat sowie beliebige Gemische dieser Isomeren ("TDI"), und / oder weitere organische Polyisocyanate der aus der Polyurethanchemie an sich bekannten Art. Sind weitere Polyisocyanate anwesend, handelt es sich bei diesen in einer bevorzugten Ausführungsform um aromatische Polyisocyanate, insbesondere um oligomeres MDI und/oder TDI. In einer besonders bevorzugten Ausführungsform enthält die organische Polyisocyanatkomponente A.1) nur monomeres MDI, bzw. enthält höchstens technisch unvermeidbare Spuren an weiteren Isocyanaten.

Die organische Polyisocyanatkomponente A) kann weiterhin organische Polyisocyanate enthalten, welche erst nach der Präpolymerisierungsreaktion zugesetzt werden. Sind weitere Polyisocyanate anwesend, handelt es sich bei diesen in einer bevorzugten Ausführungsform um aromatische Polyisocyanate. Weitere Polyisocyanate werden aber maximal in einer solchen Menge zugesetzt, dass der Gehalt an freien, nicht mit Polyol reagierten Isocyanaten 25 Gew.-%, bezogen auf die Polyisocyanatkomponente A), nicht überschreitet. Besonders bevorzugt werden keine weiteren Polyisocyanate zugesetzt.

Bei der zur Herstellung des Semipräpolymers verwendeten Polyolkomponente A.2) handelt es sich um ein Polyetherpolyol oder um eine Polyolmischung umfassend mindestens ein Polyetherpolyol. In einer bevorzugten Ausführungsform enthält die Polyolmischung nur Polyetherpolyole. Die Polyolkomponente weist eine Funktionalität Fₙ (bezogen auf die Zerewitinoff-aktiven Wasserstoffatome in der Polyolkomponente) von > 1,5 bis < 2,5 bevorzugt von 1,8 bis 2,3 und insbesondere bevorzugt von 1,8 bis 2,1 auf, und eine mittlere OH-Zahl von 28 bis 250 mg KOH/g, bevorzugt von 56 bis 200 mg KOH/g, und besonders bevorzugt von 80 bis 180 mg KOH/g.

Bei dem Polyetherpolyol oder den Polyetherpolyolen der Komponente A.2) handelt es sich um Polyhydroxypolyether, welche auf an sich bekannte Weise durch Polyaddition von Alkylenoxiden an polyfunktionelle Starterverbindungen in Gegenwart von Katalysatoren hergestellt werden können. Bevorzugt werden die Polyhydroxypolyether aus einer Starterverbindung mit durchschnittlich 2 bis 8 aktiven Wasserstoffatomen und einem oder mehreren Alkylenoxiden hergestellt. Bevorzugte Starterverbindungen sind Moleküle mit zwei bis acht Hydroxylgruppen pro Molekül wie Wasser, Ethylenglykol, Propylenglykol, Diethylenglykol, Dipropylenglykol, Triethylenglykol, Tripropylenglykol, 1,4-Butandiol, 1,6-Hexandiol, Triethanolamin, Glycerin, Trimethylolpropan, Pentaerythrit, Sorbit und Saccharose, besonders bevorzugt ist Propylenglykol. Die Starterverbindungen können allein oder im Gemisch verwendet werden. Die Starterverbindung werden mit einem Alkylenoxid, bevorzugt mit Ethylenoxid und/oder Propylenoxid, umgesetzt. Bei Verwendung im Gemisch ist es möglich, die Alkylenoxide statistisch und/oder blockweise umzusetzen. Ebenfalls geeignet sind solche höhermolekularen Polyhydroxypolyether, in denen hochmolekulare Polyaddukte bzw. Polykondensate oder Polymerisate in feindisperser, gelöster oder aufgepfropfter Form vorliegen. Derartige modifizierte Polyhydroxyverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den Hydroxylgruppen aufweisenden Verbindungen A.2) ablaufen lässt (wie beispielsweise in DE-AS 1 168 075 beschrieben). Auch durch Vinylpolymerisate modifizierte Polyhydroxyverbindungen, wie sie z.B. durch Polymerisation von Styrol und Acrylnitril in Gegenwart von Polyethern (z.B. gemäß US-PS 3 383 351) erhalten werden, sind für das erfindungsgemäße Verfahren als Polyolkomponente A.2) geeignet. Vertreter der genannten Komponente A.2) sind z.B. im Kunststoff-Handbuch, Band VII "Polyurethane", 3. Auflage, Carl Hanser Verlag, München / Wien, 1993, Seiten 57 - 67 bzw. Seiten 88 - 90 beschrieben.

Daneben kann die Komponente A.2) Anteile an weiteren Polyolen, z.B. Polyesterpolyole, Polyetheresterpolyole, Polycarbonatpolyole und/oder Polyether-Polycarbonatdiole, enthalten. Sind weitere Polyole anwesend, liegt deren Anteil vorzugsweise unter 25 Gew.-%, besonders bevorzugt unter 10 Gew.-% (bezogen auf das Gesamtgewicht der Komponente A.2).

Die organische Polyisocyanatkomponente A) ist weiterhin dadurch gekennzeichnet, dass der Gehalt an freien (d.h. nicht mit Polyol reagierten) Polyisocyanaten 0 Gew.-% bis < 25 Gew.-%, bevorzugt > 5 Gew.-% bis < 22 Gew.-%, bezogen auf das Gesamtgewicht der Komponente A), beträgt. Hierunter wird im Rahmen der vorliegenden Erfindung verstanden, dass der Mindestgehalt unmittelbar nach dem Vermischen der einzelnen Komponenten des Reaktionssystems eingehalten werden muss. Der Gehalt an freiem Polyisocyanat in einer Polyisocyanatkomponente A), welche über einen Zeitraum von mehreren Tagen gelagert wird, kann sich gegebenenfalls noch verringern.

Weiterhin ist die organische Polyisocyanatkomponente A) dadurch gekennzeichnet, dass der NCO-Gehalt > 7 Gew.-% bis 13 Gew.-%, bevorzugt > 7 Gew.-% bis 12 Gew.-%, bezogen auf das Gesamtgewicht der Komponente A), beträgt.

Die Herstellung des Semipräpolymers kann im Prinzip auf jede dem Fachmann bekannte Weise erfolgen. In vorteilhafter Ausgestaltung wird diese durch Umsetzung von zumindest einer isocyanatreaktiven Verbindung mit einem Überschuss der organischen Polyisocyanatverbindung A.1), gegebenenfalls gefolgt von teilweisem Abdestillieren der nicht reagierten Polyisocyanatverbindung A.1) bis zum gewünschten Gehalt an freiem Isocyanat, hergestellt. Die Umsetzung der Komponenten A.1) und A.2) kann in Gegenwart einer die Präpolymerisierung katalysierenden Katalysatorkomponente ("Präpolymerisierungskatalysator") erfolgen, bevorzugt erfolgt die Umsetzung jedoch nicht in Gegenwart eines Präpolymerisierungskatalysators bzw. es sind höchstens technisch unvermeidbare Spuren eines Präpolymerisierungskatalysators anwesend.

Ferner kann die organische Polyisocyanatkomponente A) eine Viskosität von 2000 mPas bis 30000 mPas gemessen bei 50 °C nach DIN 53019 (2008) aufweisen, insbesondere 5000 mPas bis 25000 mPas. Dies ist besonders vorteilhaft, weil solche Polyisocyanatkomponenten A) noch gut weiter verarbeitbar sind.

Bei der isocyanatreaktiven Komponente B) handelt es sich um eine solche Komponente, deren isocyanatreaktiven funktionellen Gruppen ausschließlich solche mit wenigstens einem Zerewitinoff-aktiven Wasserstoffatom sind. Bevorzugt enthält B) mindestens ein Polyol oder besteht aus einem oder mehreren Polyolen, wobei das Polyol bzw. die Polyolmischung insbesondere
- eine (mittlere) OH-Zahl von 100 bis 400 mg KOH/g aufweist, vorzugsweise 150 bis 300 mg KOH/g und/ oder
- eine Funktionalität Fₙ von 1,0 bis 4,0 besitzt, bevorzugt 1,5 bis 3,5, besonders bevorzugt 1,8 bis 3,0, aufweist.

Besonders bevorzugte Polyole sind ausgewählt aus Polyetherpolyolen, Polyesterpolyolen und/ oder Polyetheresterpolyolen, insbesondere aus den oben unter der Komponente A.2) beschriebenen Polyhydroxypolyethern, bevorzugt aus einem Ethylenoxideinheiten aufweisenden Polyol, besonders bevorzugt aus einem Polyethylenpolyol. Vorzugsweise enthalten die Polyole auch keine tertiäre Aminogruppe in der Polymerkette gebunden, da solche Polyole katalytisch aktiv wirken.

Bevorzugt sind Ethylenoxid-reiche Polyetherpolyole mit Fₙ = 2 - 4, insbesondere enthaltend > 50 Gew.-% Ethylenoxid (bezogen auf die Massensumme der enthaltenen Alkylenoxide). Als Starterkomponenten kommen insbesondere solche mit einer Funktionalität zwischen 2 und 4 in Betracht, bevorzugt Glycerin, Trimethylolpropan, Pentaerythrit, Propylenglykol und Ethylenglykol, besonders bevorzugt Propylenglykol und Ethylenglykol. Die Starterverbindungen werden mit den Alkylenoxiden, bevorzugt mit Ethylenoxid oder Ethylenoxid und Propylenoxid umgesetzt. Dies kann in statistischer und/oder blockweiser Weise erfolgen.

Das Verhältnis von organischer Polyisocyanatkomponente A) und isocyanatreaktiver Komponente B) wird im Reaktionssystem so eingestellt, dass ein Überschuss an Isocyanatgruppen resultiert.

Weiterhin enthält das Einkomponenten - Reaktionssystem mindestens einen Schaumstabilisator C). Dabei kann es sich um siliconhaltige Schaumstabilisatoren handeln, wie Siloxan-Oxyalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Toluidin, Bisphenol-A, alkyliertem Bisphenol-A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphthol, Formaldehyd und Alkylnaphthol sowie Formaldehyd und Bisphenol-A. Als Alkoxylierungsreagenzien können beispielsweise Ethylenoxid und/oder Propylenoxid eingesetzt werden. Als Schaumstabilisatoren eignen sich insbesondere solche Schaumstabilisatoren, welche ausgewählt sind aus der Gruppe der Polyether-Polydialkoxysilan-Copolymere, wobei die Alkoxygruppen unabhängig voneinander insbesondere ausgewählt sind aus aliphatischen Kohlenwasserstoffresten mit einem bis zehn Kohlenstoffatomen, vorzugsweise aus Methyl-, Ethyl-, n-Propyl- oder i-Propyl-Resten.

Bei dem erfindungsgemäßen Reaktionssystem kann als Katalysator D) prinzipiell jeder für diesen Zweck dem Fachmann als geeignet bekannter Katalysator verwendet werden, beispielsweise ein Aminkatalysator. Insbesondere ist Bis-(morpholino)-diethylether als Katalysator D) bevorzugt, da er besonders selektiv die Reaktion des Isocyanats mit Wasser katalysiert.

Das Reaktionssystem enthält weiterhin als Komponente E) wenigstens ein physikalisches Treibmittel mit einem Siedepunkt < 0 °C und gegebenenfalls Co-Treibmittel. Als Treibmittel sind Kohlenwasserstoffe bevorzugt, insbesondere die Isomeren des Propan und Butan. Als Co-Treibmittel sind ebenfalls physikalische Treibmittel mit einem Siedepunkt < 0 °C bevorzugt, welche zusätzlich noch eine emulgierende oder löslichkeitsvermittelnde Wirkung aufweisen. Bevorzugt wird als Co-Treibmittel Dimethylether eingesetzt.

In dem erfindungsgemäßen Reaktionssystem ist weiterhin als Komponente F) eine gegenüber Isocyanaten nicht reaktive Verbindung enthalten. Die Komponente F) ist ausgewählt aus der Gruppe bestehend aus Lactonen, Lactiden, cyclischen Carbonaten, cyclischen Anhydriden und Mischungen dieser Verbindungen.

Lactone im Sinne der Erfindung sind cyclische Verbindungen enthaltend eine Esterbindung im Ring. Bevorzugte Verbindungen der Lactone sind 4-gliedrige Ringlactone wie β-Propiolacton, (3-Butyrolacton, β-Isovalerolacton, β-Caprolacton, β-Isocaprolacton, β-Methyl-β-valerolacton, 5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on, 6-gliedrige Ringlactone, wie δ-Valerolacton, 1,4-Dioxan-2-on, Dihydrocumarin, und 3-Phenyl-3,4-dihydro-1H-isochromen-1-on, 7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4S)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5S,7S)-5-Methyl-7-(propan-2-yl)oxepan-2-on, 4-Methyl-7-(propan-2-yl)oxepan-2-on, höhergliedrige Ringlactone, wie (7E)-Oxacycloheptadec-7-en-2-on.

Besonders bevorzugt ist ε-Caprolacton und Dihydrocumarin.

Lactide im Sinne der Erfindung sind cyclische Verbindungen enthaltend zwei oder mehr Esterbindungen im Ring. Bevorzugte Verbindungen sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate werden vorzugsweise Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat, Trimethylencarbonat, Neopentylglykolcarbonat (5,5-Dimethyl-1,3-dioxan-2-on), 2, 2, 4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-5 1,3-dioxan-2-on und 5,5-Dipropyl-1,3-dioxan-2-on. Besonders bevorzugt sind Propylencarbonat, Ethylencarbonat, Trimethylencarbonat und Neopentylglykolcarbonat, ganz besonders bevorzugt ist Propylencarbonat.

Als cyclische Anhydride werden vorzugsweise Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Bernsteinsäureanhydrid, Maleinsäureanhydrid und Phthalsäureanhydrid.

Der Anteil der Komponente F) beträgt bevorzugt 0,5 Gew.-% bis 20,0 Gew.-%, besonders bevorzugt 0,5 Gew.-% bis 8,0 Gew.-% und ganz besonders bevorzugt 1,5 Gew.-% bis 5,0 Gew.-%, jeweils bezogen auf die Gesamtmasse der Komponenten A) bis G).

Die Komponente F) kann einzeln oder als Mischung aus den genannten Verbindungen eingesetzt werden. Bevorzugt ist die Komponente F) bei 25°C flüssig.

Im Sinne dieser Anmeldung bedeutet "nicht gegenüber Isocyanat reaktive Verbindung" eine Verbindung, welche als Reinstoff unter normalen Bedingungen keine Zerewitinoff-aktiven Wasserstoffatome aufweist.

Das Reaktionssystem kann daneben weitere Hilfs- und Zusatzstoffe G) enthalten, z.B. Flammschutzmittel, Zellregler, Weichmacher und Verdünner, wie z.B. langkettige Chlorparaffine und Paraffine, Pigmente oder Farbstoffe, oberflächenaktive Verbindungen und/oder Stabilisatoren gegen oxidativen, thermischen oder mikrobiellen Abbau bzw. Alterung.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

Das Reaktionssystem kann ferner eine Säure, bevorzugt mit einem pKs-Wert von wenigstens 0, oder ein Säurederivat wie z.B. ein Säurechlorid, bevorzugt ein Säurechlorid einer aromatischen Carbonsäure, z.B. Phthalsäuredichlorid, enthalten, insbesondere in einer Menge von 10 bis 500 ppm bezogen auf die Menge an organischer Polyisocyanatkomponente A), vorzugsweise von 50 bis 300 ppm. Durch den Zusatz solcher Verbindungen kann eine Reaktion des Präpolymeren mit sich selbst weitestgehend unterdrückt werden, beispielsweise eine Allophanatisierung.

In einer bevorzugten Ausführungsform enthält das Reaktionssystem keine kurzkettigen Monoole oder Hydroxyketone. Als "kurzkettig" im Sinne dieser Anmeldung werden insbesondere solche Monoole bzw. Hydroxyketone bezeichnet, welche ein Molekulargewicht von < 200 g/mol aufweisen. Solche Verbindungen können als Zellöffner wirken, was hier nicht erwünscht ist.

Überraschenderweise wurde weiterhin gefunden, dass sich mit den erfindungsgemäßen 1K-Reaktionssystemen viskoelastische PUR-Schaumstoffe mit vorteilhaften Brandeigenschaften, insbesondere eine E-Klassifizierung nach der Brandschutznorm DIN EN 13501-1 (2010) ohne (nennenswerten) weiteren Zusatz von Flammschutzmitteln einstellen lassen. Das ist vor allem deswegen überraschend, da dem durchschnittlichen Fachmann bekannt ist, dass normale PUR-Schaumstoffe auf der Basis von monomerem MDI sehr hohe Zusätze (20 Gew.-% - 50 Gew.-% bezogen auf die Polyolformulierung) an Flammschutzmitteln benötigen, um diese Brandanforderungen zu erreichen. Dagegen kommen Polyurethan/Polyisocyanurat-Schaumstoffe (PUR/PIR-Schaumstoffe) schon mit geringeren Zusätzen wie beispielsweise < 20 Gew.-% bezogen auf die Polyolformulierung an Flammschutzmittel aufgrund der inhärenten flammwidrigeren Eigenschaften des trimerisierten Polymers aus. Insofern enthält nach einer besonders bevorzugten Ausführungsform des erfindungsgemäßen Reaktionssystems dieses weniger als 5 Gew.-% eines Flammschutzmittels, bezogen auf das Gesamtgewicht der Komponenten A) bis G), insbesondere eines Flammschutzmittels ausgewählt aus der Gruppe der Verbindungen bestehend aus halogenierten Phosphaten, Arylphosphaten, Alkylphosphaten, Alkyl-Aryl-phosphaten, Phosphonaten sowie Flammschutzmitteln ohne gegenüber Polyisocyanaten und/ oder gegenüber Polyolen reaktiven Gruppen. Bevorzugt enthält das Reaktionssystem weniger als 2 Gew.-%, vorzugsweise weniger als 1 Gew.-%, bezogen auf das Gesamtgewicht der Komponenten A) bis G), und besonders bevorzugt kein Flammschutzmittel.

Neben den bereits erwähnten ökologischen Vorteilen kann auch durch den Verzicht auf solche Flammschutzmittel die weichmachende Wirkung dieser Flammschutzmittel im aus dem Reaktionssystem erzeugten Polyurethan-Schaumstoff vermieden werden.

Ein bevorzugtes erfindungsgemäßes Reaktionssystem enthält oder besteht aus den folgenden Komponenten:
68 bis 90 Gew.-% organische Polyisocyanatkomponente A),
0 bis 5 Gew.-% isocyanatreaktive Komponente B),
0,1 bis 1,0 Gew.-% eines Stabilisators C),
0,1 bis 1,0 Gew.-% an Katalysator D) und
9,3 bis 30,0 Gew.-% mindestens eines physikalischen Treibmittels mit einem Siedepunkt von weniger als 0 °C sowie gegebenenfalls Co-Treibmittel (Komponente E), und
0,5 bis 20,0 Gew.-% einer gegenüber Isocyanaten nicht reaktiven Verbindung ausgewählt aus der Gruppe bestehend aus Lactonen, Lactiden, cyclischen Carbonaten, cyclischen Anhydriden und Mischungen dieser Verbindungen (Komponente F),
0 bis 20 Gew.-% Hilfs- und Zusatzstoffe (Komponente G),
jeweils bezogen auf die Gesamtmasse der Komponenten A) bis G).

Die bevorzugten Ausführungsformen können einzeln oder auch miteinander verknüpft ausgeführt werden.

Ein weiterer Gegenstand der vorliegenden Erfindung betrifft ein Verfahren zur Herstellung eines erfindungsgemäßen Einkomponenten-Reaktionssystems, umfassend die Schritte
i) Herstellung einer organischen Polyisocyanatkomponente A) mit einem Gehalt an freien, nicht reagierten Isocyanaten von 0 Gew.-% bis < 25 Gew.-%, und einem NCO-Gehalt von > 7 Gew.-% bis 13 Gew.-% gemäß EN ISO 11909 (2007), jeweils bezogen auf das Gesamtgewicht der Komponente A),
   durch Umsetzung von
   einer organischen Polyisocyanatkomponente A.1), welche zu mindestens 75 Gew.-% aus monomerem MDI besteht, und
   einer Polyolkomponente A.2) mit einer Funktionalität Fₙ (bezogen auf die Zerewitinoffreaktiven Wasserstoffatome in der Polyolkomponente) von > 1,5 bis < 2,5 und einer OH-Zahl von 28 bis 200 mg KOH/g
   zu einem Semipräpolymer, und
   (optional) Abmischen des so erhaltenen Semipräpolymers mit weiteren Polyisocyanaten
ii) ggfls. Umsetzung des in Schritt i) erhaltenen organische Polyisocyanatkomponente A) mit
   einer isocyanatreaktiven Komponente B), deren isocyanatreaktive funktionelle Gruppen ausschließlich solche mit wenigstens einem Zerewitinoff-aktiven Wasserstoffatom sind,
   in Anwesenheit von
   mindestens einem Schaumstabilisator C),
   mindestens einem Katalysator D), der geeignet ist, die Reaktion des Semipräpolymers mit der Luftfeuchtigkeit zu katalysieren,
   mindestens einem physikalischen Treibmittel mit einem Siedepunkt von weniger als 0 °C und gegebenenfalls Co-Treibmittel (Komponente E),
   mindestens einer gegenüber Isocyanaten nicht reaktiven Verbindung ausgewählt aus der Gruppe bestehend aus Lactonen, Lactiden, cyclischen Carbonaten, cyclischen Anhydriden und Mischungen dieser Verbindungen (Komponente F) sowie
   gegebenenfalls Hilfs- und Zusatzstoffen (Komponente G).
   Die Erfindung betrifft weiterhin ein Verfahren zur Herstellung eines viskoelastischen PUR-Schaumstoffs umfassend ein Verfahren zur Herstellung eines Einkomponenten-Reaktionssystems mit den Schritten i) und ii) und dem nachfolgenden Schritt
iii) Einwirken von Feuchtigkeit auf das in Schritt ii) hergestellte Einkomponenten-Reaktionssystem.

Die Erfindung betrifft des Weiteren ein Verfahren zur Herstellung von viskoelastischen Polyurethan-Schaumstoffen, bei dem man die Komponenten A) bis G) eines erfindungsgemäßen Reaktionssystems miteinander vermischt und insbesondere unter Einwirkung von Feuchtigkeit reagieren lässt.

Ein weiterer Gegenstand der vorliegenden Erfindung ist ein viskoelastischer PUR-Schaumstoff, erhältlich durch Vermischen und Umsetzen der Komponenten A) bis G) eines erfindungsgemäßen Reaktionssystems.

Die Erfindung ist auch auf die Verwendung eines erfindungsgemäßen Reaktionssystems als 1K-Montageschaumstoff gerichtet, wobei das Reaktionssystem insbesondere in einen Druckbehälter, wie einen Einwegdruckbehälter, eingefüllt sind.

Schließlich betrifft die Erfindung auch einen Druckbehälter, insbesondere einen Einwegdruckbehälter, enthaltend ein erfindungsgemäßes Reaktionssystem.

In vorteilhafter Weise ist der Druckbehälter mit einem Dosierpistolen- oder Winkelaufsatz (Winkeladapter und Füllröhrchen) ausgerüstet. Als Druckbehälter eignen sich druckstabile Dosen oder gegebenenfalls auch größere Druckbehälter.

Die vorliegende Erfindung wird im Folgenden anhand von Ausführungsbeispielen näher erläutert.

### Experimenteller Teil

Die Herstellung der erfindungsgemäßen PUR-Schaumstoffe erfolgt nach einem dem Fachmann bekannten Zweistufenverfahren, bei dem die Reaktionskomponenten diskontinuierlich miteinander zur Reaktion gebracht werden und dann in bzw. auf geeignete Formen/Substrate/Hohlräume zur Aushärtung gebracht werden. Beispiele sind in USA-A 2 761 565, in G. Oertel (Hrsg.) "Kunststoff-Handbuch", Band VII, Carl Hanser Verlag, 3. Auflage, München 1993, S. 284 ff., sowie in K. Uhlig (Hrsg.) "Polyurethan Taschenbuch", Carl Hanser Verlag, 2. Auflage, Wien 2001, S. 83-102 beschrieben.

Die Messung der Hydroxylzahlen wurde gemäß der Norm DIN 53240-1 (2013) durchgeführt.

Die Viskositätsmessungen wurden gemäß der Norm DIN 53019 (2008) durchgeführt.

Für die Bestimmung des NCO-Gehalts im Polyisocyanat wurde die Norm EN ISO 11909 (2007) angewendet.

Der Gehalt an freiem (nicht mit Polyol reagierten) Isocyanat im Semipräpolymer wurde bestimmt nach einer validierten HPLC-Methode des externen Prüfinstituts Currenta GmbH & Co. OHG.

### Einsatzstoffe

- A.1-1: 4,4'-Diphenylmethandiisocyanat, Isocyanatgehalt 33,6 Gew.-%, (Desmodur^{®} 44M, Fa. Covestro Deutschland AG)
- A.2-1: Propylenglykol-gestarteter Propylenoxidpolyether, Äquivalentgewicht 432 g/mol, OH-Zahl 260 mg KOH/g, Viskosität 220 mPas (bei 25 °C)
- A.2-2: Propylenglykol-gestarteter Polyethylenoxidpolyether, Äquivalentgewicht 506 g/mol, OH-Zahl 112 mg KOH/g, Viskosität 140 mPas (bei 25°C)
- B-1: Polyethylenglykol, OH-Zahl 190 mg KOH/g, Viskosität 122 mPas (bei 25°C)
- C-1: Silikon-Polyether-Copolymer mit einer OH-Zahl von 116 mg KOH/g
- D-1: 2,2-Dimorpholinyldimethylether (Fa. AirProducts)
- E-1: iso-Butan (Fa. Merck)
- E-2: Dimethylether (Fa. Merck)
- F-1: Propylencarbonat (99,7 %, Fa. Sigma-Aldrich)

### Herstellung des Semipräpolymers A-1

In einem 5L-Dreihalskolben mit Gaseinlass, Rückflusskühler, Rührer und Tropftrichter wird die benötigte Isocyanatmenge vorgelegt, mit Stickstoff beaufschlagt und unter Rühren auf eine Temperatur von 80°C aufgeheizt. Unter Einhalten dieser Temperatur wird das bzw. die Polyole zugegeben. Das Gemisch wird über 2 Stunden bei dieser Temperatur zur Vervollständigung des Umsatzes gerührt. Zur Charakterisierung des Produkts werden der Isocyanatgehalt und die Viskosität bestimmt. Die Rezepturen sind der folgenden Tabelle 1 zu entnehmen.

**Tabelle 1**

| **Rezeptur** | | **A-1** |
|---|---|---|
| A.1-1 | Gew.-% | 45,02 |
| A.2-1 | Gew.-% | 18,05 |
| A.2-2 | Gew.-% | 36,93 |
| Fₙ Polyether - Gemisch | | 2 |
| Isocyanatgehalt¹⁾ | Gew.-% | 8,1 |
| Viskosität bei 50°C | mPas | 7200 |

| | | |
|---|---|---|
| ¹⁾Isocyanatgehalt bezogen auf die Masse des Semipräpolymers A-1 = 100 Gew.-% | | |

Das Semipräpolymer A-1 wird als Polyisocyanatkomponente A) zur Herstellung der Einkomponenten-Reaktionssysteme eingesetzt (es werden keine weiteren Polyisocyanate zugesetzt).

### Herstellung der 1K-Formulierungen in Einweg-Druckbehältern

Zur Herstellung der 1K-Formulierungen in Einweg-Druckbehältern wurden nacheinander die benötigten Mengen des jeweiligen Semipräpolymers A-1 (Tabelle 1) in einem Mischbehälter vorgelegt und mit entsprechenden Mengen des Schaumstabilisators C-1, des Aminkatalysators D-1 und eines weiteren Polyols vermischt (siehe Tabelle 2). Anschließend wurde die Mischung in einen Einweg-Druckbehälter überführt und dieser dicht verschlossen. Sofern nicht anders angegeben, wurden von den in der Tabelle 2 aufgeführten 1K-Formulierungen je 500 mL in Einweg-Druckbehälter mit einem Fassungsvermögen von 1000 mL gefüllt. Über das aufgesetzte Ventil wurden mittels einer entsprechenden Dosiereinheit die benötigten Mengen der Treibmittel zugesetzt. Abschließend wurde der Einweg-Druckbehälter bis zur vollständigen Homogenisierung der 1K-Formulierung geschüttelt. Die so hergestellten 1K-Formulierungen sind nachfolgend in den Beispielen der folgenden Tabelle 2 angegeben.

**Tabelle 2**

| **Beispiel** | | **1** (**Vgl.**) | **2** (**Erf.**) |
|---|---|---|---|
| A-1 | g | 358,4 | 342,3 |
| B-1 | g | 4,30 | 4,13 |
| C-1 | g | 1,29 | 1,24 |
| D-1 | g | 1,72 | 1,65 |
| E-1 | g | 74,4 | 74,4 |
| E-2 | g | 46,1 | 46,1 |
| F-1 | g | - | 16,42 |
| **Füllmenge** | g | 486,2 | 486,2 |
| **Kennzahl** | | 4014 | 4014 |

### Herstellung von Polyurethan-Freischäumen (viskoelastische PUR-Schaumstoffe)

Nach Lagerung des mit der 1K-Formulierung gefüllten Einweg-Druckbehälters über mindestens 24 Stunden wird die Dose 30 Sekunden geschüttelt, bevor der Materialaustrag auf eine mit Wasser besprühte Papierlage (PE-beschichtetes Natronkraftpapier, 130 g/m², 595 × 160 mm²) erfolgt. Hierzu wird der Druckbehälter über Kopf in einer langsamen, linienziehenden Bewegung ohne Unterbrechung über das Papier geführt. Der PUR-Schaumstoff expandiert unter den aktuell vorherrschenden Bedingungen (Raumtemperatur, Normaldruck). Die zur Aushärtung erforderliche Feuchtigkeit wird über das Besprühen des Papiers mit Wasser geliefert. Diese Verfahrensweise ist unabhängig von der jeweilig vorherrschenden Luftfeuchtigkeit und liefert die reproduzierbarsten Ergebnisse.

### Messung der Klebfreizeit

Nach erfolgtem Austrag wird die Klebfreizeit der Polyurethan-Schaumstoffoberfläche nach TM 1014:2013 (FEICA) ermittelt.

### Bewertung der Zellgröße

Die Zellgröße wird generell einen Tag nach erfolgtem Austrag am PUR-Schaumstoff subjektiv bewertet. Hierzu liegen dem in dieser Methodik erfahrenen Mitarbeiter entsprechende Vergleichsmuster vor, anhand derer die Bewertung gemäß eines Schulnotensystems vorgenommen wird. Daher bedeuten die hierzu angegebenen Zahlen: 1 = sehr gut (sehr kleine Zellen), 2 = gut, 3 = befriedigend, 4 = ausreichend, 5 = mangelhaft, 6 = ungenügend (sehr große Zellen).

### Bewertung der Zellstörung

Die Zellstörung wird einen Tag nach erfolgtem Austrag am PUR-Schaumstoff subjektiv bewertet. Als Zellstörung werden leicht von dem an sich feinzelligen PUR-Schaumstoff unterscheidbare Zonen mit groben Zellen betrachtet. Hierzu liegen dem in dieser Methodik erfahrenen Mitarbeiter entsprechende Vergleichsmuster vor, anhand derer die Bewertung gemäß eines Schulnotensystems vorgenommen wird. Daher bedeuten die hierzu angegebenen Zahlen: 1 = sehr gut, 2 = gut, 3 = befriedigend, 4 = ausreichend, 5 = mangelhaft, 6 = ungenügend.

### Bewertung der Härte

Die Härte der PUR-Schaumstoffe wird einen Tag nach erfolgtem Austrag am PUR-Schaumstoff durch das Eindrücken mit dem Daumen subjektiv bewertet. Hierzu liegen dem in dieser Methodik erfahrenen Mitarbeiter entsprechende Vergleichsmuster vor.

### Herstellung von Prüfkörpern zur Messung der Brandeigenschaften und Dämpfung

Die Brandeigenschaften werden an geschäumten Formteilen ermittelt. Hierzu wird ein in der Länge rechts und links mit Gipskartonplatten (700 mm x 90 mm x 12,5 mm) ausgekleideter, nach oben offener Schacht (700 mm x 90 mm x 55 mm) mit einem einzigen, ununterbrochenen Austrag ausgeschäumt. Die über die Länge von 700 mm oben überstehende Schaumstofffront wird so abgetrennt, dass die Schaumstoffschicht mit den Gipskartonplatten abschließt. Somit ergeben sich 700 mm lange und 90 mm hohe Sandwichelemente, die über die Dicke verteilt folgenden lagigen Aufbau haben: Gipskarton (12,5 mm), PUR-Schaumstoff (30 mm), Gipskarton (12,5 mm). Diese Elemente werden auf 190 mm abgelängt und einer Brandprüfung unterzogen. Dazu wird ein Kleinbrennertest gemäß DIN EN ISO 11925-2 (2010) (Kantenbeflammung) durchgeführt.

Zur Bestimmung der Dämpfung werden die Sandwichelemente auf das Format 50 mm x 50 mm zugeschnitten und die Dämpfung (Stauchhärte) bei einer Verformung von 40% im 4. Belastungszyklus gemäß der Norm DIN EN ISO 3386-1 (2015) ermittelt.

Die Ergebnisse zu dem gemäß der vorliegenden Anmeldung hergestellten 1K-Reaktionssystem, sowie dem hieraus hergestellten viskoelastischen Polyurethan-Schaumstoff und seinen Eigenschaften sind in der folgenden Tabelle 3 zusammengefasst.

**Tabelle 3**

| **Beispiel** | | **1** (**Vgl.**) | **2** (**Erf.**) |
|---|---|---|---|
| Klebfreizeit | min | **12** | **17** |
| Zellgröße | qual. | **4** | **1** |
| Zellstörung | qual. | **1** | **1** |
| Flammhöhe nach EN ISO 11925-2 (2010) | mm | **227** | **110** |
| Brandklasse nach DIN EN 13501-1 (2010) | | **F** | **E** |
| Härte | Qual. | **weich** | **weich** |
| Dämpfung nach DIN EN ISO 3386-1 (2015) | kPa | **0,2** | **0,3** |

Der Vergleich zwischen dem Vergleichsbeispiel 1 und dem erfindungsgemäßen Beispiel 2 zeigt, dass der Einsatz der Komponente F) zu einer deutlich niedrigeren Flammhöhe im Kleinbrennertest nach DIN EN ISO 11925-2 (2010) und einer Klassifizierung in die Brandklasse E führt. Des Weiteren besitzt der im erfindungsgemäßen Beispiel 2 erhaltene viskoelastische PUR-Schaumstoff eine verringerte Zellgröße und gleichzeitig erhöhte Dämpfung als der PUR-Schaumstoff aus dem Vergleichsbeispiel 1.

## Patentansprüche

1. Einkomponenten-Reaktionssystem zur Herstellung von viskoelastischen Polyurethan-Schaumstoffen, umfassend die folgenden Bestandteile:
A) eine organische Polyisocyanatkomponente , die teilweise als Präpolymer vorliegt (im folgenden genannt "Semipräpolymer"),
wobei die organische Polyisocyanatkomponente A) weiterhin **dadurch gekennzeichnet ist, dass** der Gehalt an freien, nicht mit Polyol reagierten Isocyanaten (wie in der Beschreibung definiert) 0 Gew.-% bis < 25 Gew.-%,bezogen auf die Polyisocyanatkomponente A),beträgt, und dass
der NCO-Gehalt gemäß EN ISO 11909 (2007) > 7 Gew.-% bis 13 Gew.-%, bezogen auf das Gesamtgewicht der Komponente A), beträgt,
B) ggfls. eine isocyanatreaktive Komponente, deren isocyanatreaktiven funktionellen Gruppen ausschließlich solche mit wenigstens einem Zerewitinoff-aktiven Wasserstoffatom sind,
C) mindestens einen Schaumstabilisator,
D) mindestens einen Katalysator, der geeignet ist, die Reaktion des Semipräpolymers mit der Luftfeuchtigkeit zu katalysieren,
E) mindestens ein physikalisches Treibmittel mit einem Siedepunkt von weniger als 0 °C und gegebenenfalls Co-Treibmittel,
F) mindestens eine gegenüber Isocyanaten nicht reaktive Verbindung,
G) gegebenenfalls weitere Hilfs- und Zusatzstoffe,
**dadurch gekennzeichnet, dass**
das Semipräpolymer durch Umsetzung von
A.1) einer organischen Polyisocyanatkomponente A.1), welche zu mindestens 75 Gew.-% aus den monomeren Diphenylmethandiisocyanaten 2,4'-MDI, 2,2'-MDI und/oder 4,4'-MDI besteht, und
A.2) einer Polyolkomponente A.2) mit einer Funktionalität Fₙ (bezogen auf die Zerewitinoffreaktiven Wasserstoffatome in der Polyolkomponente) von > 1,5 bis < 2,5 und einer OH-Zahl von 28 bis 200 mg KOH/g gebildet wird,
und
wobei die Komponente F) ausgewählt ist aus der Gruppe bestehend aus Lactonen, Lactiden, cyclischen Carbonaten, cyclischen Anhydriden und Mischungen dieser Verbindungen.

2. Einkomponenten-Reaktionssystem gemäß Anspruch 1, **dadurch gekennzeichnet, dass** die Polyolkomponente A.2) eine Funktionalität Fₙ von 1,8 bis 2,3 aufweist.

3. Einkomponenten-Reaktionssystem gemäß Anspruch 1 oder 2, **dadurch gekennzeichnet, dass** die isocyanatreaktive Komponente B) ein Polyetherpolyol mit einer Funktionalität Fₙ von 2 bis 4 und mit einem Ethylenoxid - Anteil von > 50 Gew.-% (bezogen auf die Massensumme der enthaltenen Alkylenoxide) enthält.

4. Einkomponenten-Reaktionssystem gemäß Anspruch 1 bis 3, **dadurch gekennzeichnet, dass** die Komponente F) ausgewählt ist aus der Gruppe bestehend aus ε-Caprolacton, Dihydrocumarin, L-Lactid, Propylencarbonat, Ethylencarbonat, Trimethylencarbonat, Neopentylglykolcarbonat, Bernsteinsäureanhydrid, Maleinsäureanhydrid, Phthalsäureanhydrid und Mischungen dieser Verbindungen.

5. Einkomponenten-Reaktionssystem gemäß Anspruch 1 bis 4, **dadurch gekennzeichnet, dass** der Anteil der Komponente F) 0,5 bis 20,0 Gew.-%, bezogen auf die Gesamtmasse der Komponenten A) bis G), beträgt.

6. Einkomponenten-Reaktionssystem gemäß einem der Ansprüche 1 bis 5, **dadurch gekennzeichnet, dass** das Einkomponenten-Reaktionssystem weniger als 5 Gew.-% eines Flammschutzmittels ausgewählt aus der Gruppe der Verbindungen bestehend aus halogenierten Phosphaten, Arylphosphaten, Alkylphosphaten, Alkyl-Aryl-phosphaten, Phosphonaten sowie Flammschutzmitteln ohne gegenüber Polyisocyanaten und/ oder gegenüber Polyolen reaktiven Gruppen enthält.

7. Einkomponenten-Reaktionssystem gemäß einem der Ansprüche 1 bis 6 umfassend die folgenden Komponenten:
68 bis 90 Gew.-% organische Polyisocyanatkomponente A),
0 bis 5 Gew.-% isocyanatreaktive Komponente B),
0,1 bis 1,0 Gew.-% eines Stabilisators C),
0,1 bis 1,0 Gew.-% an Katalysator D) und
9,3 bis 30,0 Gew.-% mindestens eines physikalischen Treibmittels mit einem Siedepunkt von weniger als 0 °C sowie gegebenenfalls Co-Treibmittel (Komponente E), und
0,5 bis 20,0 Gew.-% einer gegenüber Isocyanaten nicht reaktiven Verbindung ausgewählt aus der Gruppe bestehend aus Lactonen, Lactiden, cyclischen Carbonaten, cyclischen Anhydriden und Mischungen dieser Verbindungen (Komponente F),
0 bis 20 Gew.-% Hilfs- und Zusatzstoffe (Komponente G),
jeweils bezogen auf das Gesamtgewicht des Einkomponenten-Reaktionssystems.

8. Verfahren zur Herstellung eines Einkomponenten-Reaktionssystems, umfassend die Schritte
i) Herstellung einer organischen Polyisocyanatkomponente A) mit einem Gehalt an freien, nicht reagierten Isocyanaten (wie in der Beschreibung definiert) von 0 bis < 25 Gew.-%, und einem NCO-Gehalt von > 7 Gew.-% bis 13 Gew.-% gemäß EN ISO 11909 (2007), jeweils bezogen auf das Gesamtgewicht der Komponente A),
durch Umsetzung von
a) einer organischen Polyisocyanatkomponente A.1), welche zu mindestens 75 Gew.-% aus monomerem MDI besteht, und
b) einer Polyolkomponente A.2) mit einer Funktionalität Fₙ (bezogen auf die Zerewitinoff-aktiven Wasserstoffatome in der Polyolkomponente) von > 1,5 bis < 2,5 und einer OH-Zahl von 28 bis 200 mg KOH/g
zu einem Semipräpolymer, und
(optional) Abmischen des so erhaltenen Semipräpolymers mit weiteren Polyisocyanaten
ii) Umsetzung des in Schritt i) erhaltenen organische Polyisocyanatkomponente A) mit
B) einer isocyanatreaktiven Komponente, deren isocyanatreaktive funktionelle Gruppen ausschließlich solche mit wenigstens einem Zerewitinoff-aktiven Wasserstoffatom sind,
in Anwesenheit von
C) mindestens einem Schaumstabilisator,
D) mindestens einem Katalysator, der geeignet ist, die Reaktion des Semipräpolymers mit der Luftfeuchtigkeit zu katalysieren,
E) mindestens einem physikalischen Treibmittel mit einem Siedepunkt von weniger als 0 °C und gegebenenfalls Co-Treibmittel,
F) mindestens einer gegenüber Isocyanaten nicht reaktiven Verbindung ausgewählt aus der Gruppe bestehend aus Lactonen, Lactiden, cyclischen Carbonaten, cyclischen Anhydriden und Mischungen dieser Verbindungen, sowie
G) gegebenenfalls weitere Hilfs- und Zusatzstoffen.

9. Verfahren zur Herstellung eines viskoelastischen Polyurethan-Schaumstoffes, erhältlich durch Vermischen und Umsetzen der Komponenten A) bis G) eines Einkomponenten-Reaktionssystems gemäß einem der Ansprüche 1 bis 7 unter Einwirkung von Feuchtigkeit.

10. Verfahren zur Herstellung eines viskoelastischen Polyurethan-Schaumstoffes, umfassend die Schritte
a) Herstellung eines Einkomponenten-Reaktionssystems nach einem Verfahren gemäß Anspruch 8 und
b) Einwirken von Feuchtigkeit auf das in Schritt a) hergestellte Einkomponenten-Reaktionssystem.

11. Viskoelastischer Polyurethan-Schaumstoff, erhältlich gemäß einem Verfahren gemäß Anspruch 9 oder 10.

12. Viskoelastischer Polyurethan-Schaumstoff gemäß Anspruch 11, **dadurch gekennzeichnet, dass** er weniger als 5 Gew.-% eines Flammschutzmittels ausgewählt aus der Gruppe der Verbindungen bestehend aus halogenierten Phosphaten, Arylphosphaten, Alkylphosphaten, Alkyl-Aryl-phosphaten, Phosphonaten sowie Flammschutzmitteln ohne gegenüber Polyisocyanaten und/ oder gegenüber Polyolen reaktiven Gruppen enthält, und gleichzeitig eine Brandklassifizierung E nach europäischen der Brandschutznorm DIN EN 13501-1 (2010) erzielt.

13. Verwendung eines Einkomponenten-Reaktionssystems gemäß einem der Ansprüche 1 bis 7 für die Herstellung eines 1K-Montageschaumstoffs, wobei das Einkomponenten-Reaktionssystem in einen Druckbehälter eingefüllt ist.

14. Druckbehälter, insbesondere ein Einwegdruckbehälter, enthaltend ein Einkomponenten-Reaktionssystem gemäß einem der Ansprüche 1 bis 7.

15. Verwendung der viskoelastischen Polyurethan-Schaumstoffe gemäß Anspruch 11 oder 12 für Anwendungen in der Bauindustrie.

## Claims

1. One-component reaction system for producing viscoelastic polyurethane foams comprising the following constituents:
A) an organic polyisocyanate component which is partly in the form of a prepolymer (referred to as "semi-prepolymer" hereinbelow),
wherein the organic polyisocyanate component A) is further **characterized in that** the content of free isocyanates not reacted with polyol (as defined in the description) is 0% by weight to < 25% by weight based on the polyisocyanate component A) and **in that**
the NCO content according to EN ISO 11909 (2007) is > 7% by weight to 13% by weight based on the total weight of the component A),
B) optionally an isocyanate-reactive component whose isocyanate-reactive functional groups are exclusively those having at least one Zerewitinoff-active hydrogen atom,
C) at least one foam stabilizer,
D) at least one catalyst suitable for catalyzing the reaction of the semi-prepolymer with atmospheric humidity,
E) at least one physical blowing agent having a boiling point of less than 0°C and optionally co-blowing agents,
F) at least one isocyanate-unreactive compound,
G) optionally further assistant and additive substances,
**characterized in that**
the semi-prepolymer is formed by reaction of
A.1) an organic polyisocyanate component A.1) consisting to an extent of at least 75% by weight of the monomeric diphenylmethane diisocyanates 2,4'-MDI, 2,2'-MDI and/or 4,4'-MDI and
A.2) a polyol component A.2) having a functionality Fₙ (based on the Zerewitinoff-reactive hydrogen atoms in the polyol component) of > 1.5 to < 2.5 and an OH number of 28 to 200 mg KOH/g
and
wherein the component F) is selected from the group consisting of lactones, lactides, cyclic carbonates, cyclic anhydrides and mixtures of these compounds.

2. One-component reaction system according to Claim 1, **characterized in that** the polyol component A.2) has a functionality Fₙ of 1.8 to 2.3.

3. One-component reaction system according to Claim 1 or 2, **characterized in that** the isocyanate-reactive component B) contains a polyether polyol having a functionality Fₙ of 2 to 4 and having an ethylene oxide proportion of > 50% by weight (based on the sum of the masses of the alkylene oxides present).

4. One-component reaction system according to Claim 1 to 3, **characterized in that** the component F) is selected from the group consisting of ε-caprolactone, dihydrocoumarin, L-lactide, propylene carbonate, ethylene carbonate, trimethylene carbonate, neopentyl glycol carbonate, succinic anhydride, maleic anhydride, phthalic anhydride and mixtures of these compounds.

5. One-component reaction system according to Claim 1 to 4, **characterized in that** the proportion of the component F) is 0.5% to 20.0% by weight based on the total weight of the components A) to G).

6. One-component reaction system according to any of Claims 1 to 5, **characterized in that** the one-component reaction system contains less than 5% by weight of a flame retardant selected from the group of compounds consisting of halogenated phosphates, aryl phosphates, alkyl phosphates, alkyl aryl phosphates, phosphonates and flame retardants without polyisocyanate- and/or polyol-reactive groups.

7. One-component reaction system according to any of Claims 1 to 6 comprising the following components:
68% to 90% by weight of organic polyisocyanate component A),
0% to 5% by weight of isocyanate-reactive component B),
0.1% to 1.0% by weight of a stabilizer C),
0.1% to 1.0% by weight of catalyst D) and
9.3% to 30.0% by weight of at least one physical blowing agent having a boiling point of less than 0°C and optionally co-blowing agents (component E) and
0.5% to 20.0% by weight of an isocyanate-unreactive compound selected from the group consisting of lactones, lactides, cyclic carbonates, cyclic anhydrides and mixtures of these compounds (component F),
0% to 20% by weight of assistant and additive substances (component G),
in each case based on the total weight of the one-component reaction system.

8. Process for producing a one-component reaction system comprising the steps of
i) producing an organic polyisocyanate component A) having a content of free, unreacted isocyanates (as defined in the description) of 0% to < 25% by weight and an NCO content of > 7% by weight to 13% by weight according to EN ISO 11909 (2007), in each case based on the total weight of the component A),
by reacting
a) an organic polyisocyanate component A.1) consisting to an extent of at least 75% by weight of monomeric MDI and
b) a polyol component A.2) having a functionality Fₙ (based on the Zerewitinoff-active hydrogen atoms in the polyol component) of > 1.5 to < 2.5 and an OH number of 28 to 200 mg KOH/g
to afford a semi-prepolymer and
(optionally) blending the thus obtained semi-prepolymer with further polyisocyanates
ii) reacting the organic polyisocyanate component
A) obtained in step i) with
B) an isocyanate-reactive component whose isocyanate-reactive functional groups are exclusively those having at least one Zerewitinoff-active hydrogen atom in the presence of
C) at least one foam stabilizer,
D) at least one catalyst suitable for catalyzing the reaction of the semi-prepolymer with atmospheric humidity,
E) at least one physical blowing agent having a boiling point of less than 0°C and optionally co-blowing agents,
F) at least one isocyanate-unreactive compound selected from the group consisting of lactones, lactides, cyclic carbonates, cyclic anhydrides and mixtures of these compounds and
G) optionally further assistant and additive substances.

9. Process for producing a viscoelastic polyurethane foam obtainable by mixing and reacting the components A) to G) of a one-component reaction system according to any of Claims 1 to 7 with exposure to moisture.

10. Process for producing a viscoelastic polyurethane foam comprising the steps of
a) producing a one-component reaction system by a process according to Claim 8 and
b) exposure of the one-component reaction system produced in step a) to moisture.

11. Viscoelastic polyurethane foam obtainable by a process according to Claim 9 or 10.

12. Viscoelastic polyurethane foam according to Claim 11, **characterized in that** it contains less than 5% by weight of a flame retardant selected from the group of the compounds consisting of halogenated phosphates, aryl phosphates, alkyl phosphates, alkyl aryl phosphates, phosphonates and flame retardants without polyisocyanate- and/or polyol-reactive groups while simultaneously achieving fire classification E according to the European fire safety standard DIN EN 13501-1 (2010).

13. Use of a one-component reaction system according to any of Claims 1 to 7 for producing a 1K expanding foam, wherein the one-component reaction system has been filled into a pressurized container.

14. Pressurized container, in particular a single-use pressurized container, containing a one-component reaction system according to any of Claims 1 to 7.

15. Use of the viscoelastic polyurethane foams according to Claim 11 or 12 for applications in the construction industry.

## Revendications

1. Système de réaction à un composant pour la préparation de mousses de polyuréthane viscoélastiques, comprenant les ingrédients suivants :
A) un composant de type polyisocyanate organique qui est partiellement présent en tant que prépolymère (nommé par la suite « semi-prépolymère »),
le composant de type polyisocyanate organique A) étant en outre **caractérisé en ce que** la teneur en isocyanates libres n'ayant pas réagis avec un polyol (comme défini dans la description) est de 0 % en poids à < 25 % en poids, par rapport au composant de type polyisocyanate A), et **en ce que** la teneur en NCO, selon la norme EN ISO 11909 (2007), est > 7 % en poids à 13 % en poids, par rapport au poids total du composant A),
B) éventuellement un composant réactif envers un isocyanate, dont les groupes fonctionnels réactifs avec un isocyanate sont exclusivement ceux comportant au moins un atome d'hydrogène actif au sens de Zéréwitinoff,
C) au moins un stabilisateur de mousse,
D) au moins un catalyseur, qui est approprié pour catalyser la réaction du semi-prépolymère avec l'humidité de l'air,
E) au moins un agent gonflant physique doté d'un point d'ébullition de moins de 0 °C et éventuellement un co-agent gonflant,
F) au moins un composé non réactif vis-à-vis d'isocyanates,
G) éventuellement d'autres auxiliaires et additifs, **caractérisé en ce que**
le semi-prépolymère est formé par transformation de
A.1) un composant de type polyisocyanate organique A.1) qui est constitué d'au moins 75 % en poids des diisocyanates de diphénylméthane monomériques 2,4'-MDI, 2,2'-MDI et/ou 4,4'-MDI, et
A.2) un composant de polyol A.2) doté d'une fonctionnalité Fₙ (par rapport aux atomes d'hydrogène réactifs au sens de Zéréwitinoff dans le composant de type polyol) de > 1,5 à < 2,5 et d'un indice d'OH de 28 à 200 mg de KOH/g,
et
le composant F) étant choisi dans le groupe constitué par des lactones, des lactides, des carbonates cycliques, des anhydrides cycliques et des mélanges de ces composés.

2. Système de réaction à un composant selon la revendication 1, **caractérisé en ce que** le composant de type polyol A.2) présente une fonctionnalité Fₙ de 1,8 à 2,3.

3. Système de réaction à un composant selon la revendication 1 ou 2, **caractérisé en ce que** le composant B) réactif avec un isocyanate contient un polyétherpolyol doté d'une fonctionnalité Fₙ de 2 à 4 et comportant une proportion un oxyde d'éthylène de > 50 % en poids (par rapport à la somme en masse des oxydes d'alkylène contenus).

4. Système de réaction à un composant selon les revendications 1 à 3, **caractérisé en ce que** le composant F) est choisi dans le groupe constitué par la ε-caprolactone, la dihydrocoumarine, le L-lactide, le carbonate de propylène, le carbonate d'éthylène, le carbonate de triméthylène, le carbonate de néopentylglycol, l'anhydride d'acide succinique, l'anhydride d'acide maléique, l'anhydride d'acide phtalique et des mélanges de ces composés.

5. Système de réaction à un composant selon les revendications 1 à 4, **caractérisé en ce que** la proportion du composant F) est de 0,5 à 20,0 % en poids, par rapport à la masse totale des composants A) à G).

6. Système de réaction à un composant selon les revendications 1 à 5, **caractérisé en ce que** le système de réaction à un composant contient moins de 5 % en poids d'un agent ignifugeant choisi dans le groupe des composés constitués par des phosphates halogénés, phosphates d'aryle, phosphates d'alkyle, phosphates d'alkyl-aryle, phosphonates ainsi que des agents ignifugeants sans groupes réactifs envers des polyisocyanates et/ou des polyols.

7. Système de réaction à un composant selon les revendications 1 à 6 comprenant les composants suivants :
68 à 90 % en poids de composant de type polyisocyanate organique A),
0 à 5 % en poids de composant réactif envers un isocyanate B),
0,1 à 1,0 % en poids d'un stabilisant C),
0,1 à 1,0 % en poids de catalyseur D) et
9,3 à 30,0 % en poids d'au moins un agent gonflant physique doté d'un point d'ébullition inférieur à 0 °C ainsi qu'éventuellement un co-agent gonflant (composant E), et
0,5 à 20,0 % en poids d'un composé non réactif envers des isocyanates choisi dans le groupe constitué par des lactones, des lactides, des carbonates cycliques, des anhydrides cycliques et des mélanges de ces composés (composant F),
0 à 20 % en poids d'auxiliaires et d'additifs (composant G),
à chaque fois par rapport au poids total du système de réaction à un composant.

8. Procédé de préparation d'un système de réaction à un composant, comprenant les étapes
i) préparation d'un composant de type polyisocyanate organique A) doté d'une teneur en isocyanates libres n'ayant pas réagis (comme défini dans la description) de 0 à < 25 % en poids, et d'une teneur en NCO, > 7 % en poids à 13 % en poids selon la norme EN ISO 11909 (2007), à chaque fois par rapport au poids total du composant A),
par transformation de
a) un composant de type polyisocyanate organique A.1) qui est constitué d'au moins 75 % en poids de MDI monomérique, et
b) un composant de type polyol A.2) doté d'une fonctionnalité Fₙ (par rapport aux atomes d'hydrogène actifs au sens de Zéréwitinoff dans le composant de type polyol) de > 1,5 à < 2,5 et d'un indice d'OH de 28 à 200 mg de KOH/g,
pour donner un semi-prépolymère, et
(éventuellement) mélange du semi-prépolymère ainsi obtenu avec d'autres polyisocyanates
ii) transformation du composant de type polyisocyanate organique A) obtenu dans l'étape i) avec
B) un composant réactif envers un isocyanate, dont les groupes fonctionnels réactifs avec un isocyanate sont exclusivement ceux comportant au moins un atome d'hydrogène actif au sens de Zéréwitinoff,
en présence de
C) au moins un stabilisateur de mousse,
D) au moins un catalyseur, qui est approprié pour catalyser la réaction du semi-prépolymère avec l'humidité de l'air,
E) au moins un agent gonflant physique doté d'un point d'ébullition de moins de 0 °C et éventuellement un co-agent gonflant,
F) au moins un composé non réactif vis-à-vis d'isocyanates, choisi dans le groupe constitué par des lactones, des lactides, des carbonates cycliques, des anhydrides cycliques et des mélanges de ces composés, ainsi que
G) éventuellement d'autres auxiliaires et additifs.

9. Procédé de préparation d'une mousse de polyuréthane viscoélastique, obtenue par mélange et transformation des composants A) à G) d'un système de réaction à un composant selon l'une quelconque des revendications 1 à 7 sous effet de l'humidité.

10. Procédé de préparation d'une mousse de polyuréthane viscoélastique, comprenant les étapes
a) préparation d'un système de réaction à un composant par un procédé selon la revendication 8 et
b) effet de l'humidité sur le système de réaction à un composant préparé dans l'étape a).

11. Mousse de polyuréthane viscoélastique, obtenue selon un procédé selon la revendication 9 ou 10.

12. Mousse de polyuréthane viscoélastique selon la revendication 11, **caractérisée en ce qu'**elle contient moins de 5 % en poids d'un agent ignifugeant choisi dans le groupe des composés constitués par des phosphates halogénés, phosphates d'aryle, phosphates d'alkyle, phosphates d'alkyl-aryle, phosphonates ainsi que des agents ignifugeants sans groupes réactifs envers des polyisocyanates et/ou des polyols, et en même temps obtient une classification d'incendie E d'après la norme européenne de protection contre les incendies DIN EN 13501-1 (2010).

13. Utilisation d'un système de réaction à un composant selon l'une quelconque des revendications 1 à 7 pour la préparation d'une mousse de montage 1K, le système de réaction à un composant étant rempli dans un récipient sous pression.

14. Récipient sous pression, en particulier récipient sous pression jetable, contenant un système de réaction à un composant selon l'une quelconque des revendications 1 à 7.

15. Utilisation de la mousse de polyuréthane viscoélastique selon la revendication 11 ou 12 pour des applications dans l'industrie de la construction.
